# EUROPÄISCHE PATENTSCHRIFT

(11) **EP 3 222 057 B1**
(45) Veröffentlichungstag und Bekanntmachung des Hinweises auf die Patenterteilung: **08.05.2019**
(21) Anmeldenummer: 15756865.0
(22) Anmeldetag: 14.08.2015
(51) Int. Cl.: H04R 25/00, G10L 17/26

(54) **VERFAHREN UND VORRICHTUNG ZUM SCHNELLEN ERKENNEN DER EIGENEN STIMME**
METHOD AND APPARATUS FOR FAST RECOGNITION OF A USER'S OWN VOICE
PROCÉDÉ ET DISPOSITIF DE DÉTECTION RAPIDE DE LA VOIX NATURELLE

(30) Priorität: 19.11.2014 DE 102014223566
(43) Veröffentlichungstag der Anmeldung: 27.09.2017
(60) Teilanmeldung: 18190668.6
(73) Patentinhaber: Sivantos Pte. Ltd., Singapore 539775 (SG)
(72) Erfinder: KAMKAR-PARSI, Homayoun, 91058 Erlangen (DE); LUGGER, Marko, 91056 Erlangen (DE)
(74) Vertreter: FDST Patentanwälte
(86) Internationale Anmeldenummer: PCT/EP2015/068796
(87) Internationale Veröffentlichungsnummer: WO 2016/078786

(56) Entgegenhaltungen:
- EP-A1- 2 242 289
- EP-A2- 2 040 486
- WO-A1-2004/077090
- US-A1- 2013 275 128
- US-A1- 2014 088 966

## Beschreibung

Die Erfindung betrifft ein Verfahren zum schnellen Erkennen der eigenen Stimme für ein Hörhilfegerät sowie eine entsprechende Vorrichtung. Die Vorrichtung empfängt Audiosignale von mindestens zwei akusto-elektrischen Wandlern und weist ein erstes Filter und ein zweites Filter zur räumlichen Trennung auf, die in Signalverbindung mit den akusto-elektrischen Wandlern stehen.

Hörhilfegeräte sind tragbare Hörvorrichtungen, die zur Versorgung von Schwerhörenden dienen. Um den zahlreichen individuellen Bedürfnissen entgegenzukommen, werden unterschiedliche Bauformen von Hörhilfegeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

Hörhilfegeräte besitzen prinzipiell als wesentliche Komponenten einen Eingangswandler, einen Verstärker und einen Ausgangswandler. Der Eingangswandler ist in der Regel ein akusto-elektrischer Wandler, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinrichtung integriert. Die Energieversorgung erfolgt üblicherweise durch eine Batterie oder einen aufladbaren Akkumulator.

Hörhilfegeräte bzw. deren Ohrschalen verschließen zum einen den Gehörgang ganz oder teilweise, zum anderen nehmen Hörhilfegeräte bevorzugt Luftschall über ihr Mikrofon auf, während Körperschall möglichst unterdrückt wird. Die Stimme des Hörgeräteträgers wird aber gerade aufgrund des Körperschalls anders als von der Umgebung wahrgenommen.

Für einen Hörgeräteträger ergibt sich aus der Tatsache, dass vor allem der Luftschall verstärkt wird, eine veränderte und ungewohnte Wahrnehmung der eigenen Stimme. Zusätzlich führt der Verschluss des Gehörgangs durch das Hörhilfegerät zu einem Effekt, der als Okklusion bezeichnet wird und die Wahrnehmung ebenfalls verfremdet. Um die eigene Stimme und externe Audioquellen unterschiedlich zu verarbeiten und den Hörgewohnheiten einer Person ohne Hörhilfegerät anzunähern, ist es erforderlich, die eigene Stimme des Hörgeräteträgers schnell und sicher zu erkennen.

Aus der Offenlegungsschrift DE 102011087984 A1 ist ein Verfahren zur Erkennung der eigenen Stimme des Trägers für ein Hörhilfegerät bekannt.

Aus der Patentanmeldung US 2006/0262944 ist eine Kommunikationsvorrichtung bekannt, die einen Filter aufweist und die eigene Stimme eines Trägers erkennt.

Die WO 2004/077090 A1 nennt ein Verfahren zum Erkennen der eigenen Stimme des Benutzers eines Kommunikationsgerätes mit wenigstens zwei Mikrofonen, wobei in einer Ausführungsform die einzelnen Mikrofonsignale jeweils verschiedenen Filtern zugeführt werden, deren Koeffizienten durch ein Optimierungsverfahren derart bestimmt werden, dass der Abstand der spektralen Leistungsdichte eines Sprachsignals des Benutzers zur spektralen Leistungsdichte eines repräsentativen Fernfeld-Signals maximiert wird. Die Mikrofonsignale werden jeweils mit diesen Koeffizienten gefiltert, um einen Nahfeld-Anteil in den Mikrofonsignalen zu ermitteln, welcher als Anteil der eigenen Stimme des Benutzers angenommen wird. Die Verwendung von wenigstens zwei Mikrofonen ist hierbei erforderlich, um bei der Ermittlung der Filterkoeffizienten mittels der Definition eines der Mikrofone als Referenzmikrofon eine Abhängigkeit von den Signalleistungen eliminieren zu können, welche zu Verfälschungen und somit zu Fehleinschätzungen hinsichtlich einer Stimmaktivität des Benutzers führen könnte.

In der US 2014/0088966 A1 wird vorgeschlagen, eine eigene Stimmaktivität eines Benutzers eines Kommunikationsgerätes anhand der Differenzen im Schalldruck zu ermitteln, welche verschiedene Schallsignale an zwei Mikrofonen des Kommunikationsgerätes hervorrufen. Die Mikrofone sind dabei derart von einander beabstandet angeordnet, dass ein Sprachsignal des Benutzers eine hinreichend hohe Differenz im Schalldruck aufweist, mit welchen das Sprachsignal auf die beiden Mikrofone auftrifft.

In der EP 2 242 289 A1 wird vorgeschlagen, in einem Hörgerät mit zwei Mikrofonen eine Stimmaktivität des Benutzers anhand der Koeffizienten eines adaptiven Filters zu erkennen, wobei ein Eingangssignal des adaptiven Filters durch eines der beiden Mikrofonsignale gebildet wird, wobei das als Führungsgröße verwendete Fehlersignal jedoch auf Basis des anderen Mikrofonsignals ermittelt wird, indem diesem das im adaptiven Filter erzeugte Kompensationssignal subtrahiert wird. Die Stimmaktivität wird dann anhand normierten Beträge der Filterkoeffizienten bestimmt.

Die EP 2 040 486 A2 nennt die Bestimmung einer Stimmaktivität eines Hörgerätebenutzers anhand eines Abgleiches einer aus zwei direktional verarbeiteten Mirkofonsignalen ermittelten Fundamentalen Frequenz mit einem der beiden unverarbeiteten Mikrofonsignale. In der US 2013/0275128 A1 wird vorgeschlagen, die eigene Stimmaktivität eines Benutzers eines Kommunikationsgerätes anhand nur eines Mikrofonsignals mittels statistischer Methoden zu ermitteln, wobei hierfür eine Übertragungsfunktion des Schallwegs vom Mund des Benutzers zum Mikrofon modelliert wird.

Die Aufgabe der vorliegenden Erfindung ist es daher, eine Vorrichtung und ein Verfahren zum Betrieb der Vorrichtung sowie eine Hörhilfegerät mit einer entsprechenden Vorrichtung bereitzustellen, die das Erkennen der eigenen Stimme verbessern.

Erfindungsgemäß wird diese Aufgabe gelöst durch ein Verfahren zum Betrieb einer Vorrichtung nach Anspruch 1 sowie eine Vorrichtung nach Anspruch 15 und ein Hörhilfegerät nach Anspruch 18 mit einer erfindungsgemäßen Vorrichtung.

Das erfindungsgemäße Verfahren ist ein Verfahren zum schnellen Erkennen der eigenen Stimme eines Hörhilfegeräteträgers für ein Hörhilfegerät. Das Hörhilfegerät weist eine Vorrichtung zum Erkennen der eigenen Stimme auf, die Audiosignale von mindestens zwei akusto-elektrischen Wandlern empfängt. Akusto-elektrische Wandler sind bei einem Hörhilfegerät üblicherweise Mikrofone. Dabei kann der Empfang von Audiosignalen so verstanden werden, dass die erfindungsgemäße Vorrichtung in direkter elektrischer Signalverbindung, analog oder digital, mit den beiden akusto-elektrischen Wandlern steht, beispielsweise wenn es sich um zwei Mikrofone eines Richtmikrofonsystems eines Hörhilfegeräts handelt. Es ist aber genauso denkbar, dass einer der akusto-elektrischen Wandler in einem zweiten Hörhilfegerät eines binauralen Hörhilfesystems oder in einer anderen separaten Einheit angeordnet ist, wobei das Audiosignal von diesem akusto-elektrischen Wandler zu der Vorrichtung auf drahtlosem oder anderen Weg übertragen wird.

Weiterhin weist die Vorrichtung ein erstes Filter und ein zweites Filter zur räumlichen Trennung auf, die in Signalverbindung mit den akusto-elektrischen Wandlern stehen. Dies können parametrisierte Filter sein, in denen beispielsweise die Audiosignale der beiden akusto-elektrischen Wandler verzögert und durch Parameter unterschiedlich gewichtet addiert werden.

In einem Schritt des erfindungsgemäßen Verfahrens werden erste Filterparameter des ersten Filters ermittelt, wobei die ersten Filterparameter dazu ausgelegt sind, die eigene Stimme des Hörhilfegeräteträgers abzuschwächen. Es ist denkbar, dass diese Filterparameter bereits bei dem Design der Vorrichtung bestimmt oder bei einem späteren Fitting ermittelt werden. Es ist aber auch denkbar, dass, wie in einem der abhängigen Ansprüche angegeben, die Filter adaptiv sind und die Filterparameter im Betrieb ermittelt werden.

Die optimalen Filterkoeffizienten zur Dämpfung der eigenen Stimme beinhalten sowohl eine Betrags- als auch eine Phasenkomponente. Dies bedeutet, dass nicht nur die Richtung eine Rolle spielt, was bei einer Fernfeldannahme der Signale genügen würde.

In einem weiteren Schritt des erfindungsgemäßen Verfahrens werden zweite Filterparameter des zweiten Filters ermittelt, wobei die zweiten Filterparameter dazu ausgelegt sind, eine externe Audioquelle abzuschwächen. Für die Art des Ermittelns gilt das zu den ersten Filterparametern zuvor gesagte in gleicher Weise.

Diese Koeffizienten, für die bestmögliche Dämpfung externer Signale, unterscheiden sich sowohl in der Betrags- als auch in der Phasenkomponente von den ersten Filterkoeffizienten zur Dämpfung der eigenen Stimme.

In einem Schritt des Verfahrens wird die Vorrichtung in einem Hörhilfegerät betrieben, wobei der erste Filter mit den ersten Filterparametern arbeitet und der zweiten Filter mit den zweiten Filterparametern.

In einem Schritt des Verfahrens erkennt die Vorrichtung die eigene Stimme in Abhängigkeit von einem Ausgangssignal des ersten Filters und des zweiten Filters. So ist es denkbar, dass die eigene Stimme erkannt wird, wenn ein Quotient oder eine Differenz oder eine normierte Differenz aus den Ausgangssignalen des ersten Filters und des zweiten Filters einen vorbestimmten Grenzwert unter- bzw. überschreitet.

Die erfindungsgemäße Vorrichtung betrifft eine Vorrichtung zum schnellen Erkennen einer eigenen Stimme eines Hörhilfegeräteträgers für ein Hörhilfegerät. Die Vorrichtung ist ausgelegt, Audiosignale von mindestens zwei akusto-elektrischen Wandlern zu empfangen. Dabei kann es sich um zwei akusto-elektrische Wandler handeln, die gemeinsam mit der Vorrichtung in dem Hörhilfegerät vorgesehen sind und eine direkte elektrische Signalverbindung, analog oder digital, mit der Vorrichtung aufweisen. Es ist aber genauso denkbar, dass einer der akusto-elektrischen Wandler in einer anderen Einheit, beispielsweise in einem zweiten Hörhilfegerät eines binauralen Hörhilfesystems vorgesehen ist und ein Audiosignal des akusto-elektrischen Wandlers mittels einer Übertragungseinrichtung drahtlos übertragbar ist.

Die Vorrichtung weist ein erstes Filter und ein zweites Filter zur räumlichen Trennung auf, die in Signalverbindung mit den akusto-elektrischen Wandlern stehen. Das erste Filter ist dazu ausgelegt, die eigene Stimme des Hörhilfegeräteträgers abzuschwächen und das zweite Filter ist dazu ausgelegt, eine externe Audioquelle abzuschwächen.

Die Vorrichtung ist weiterhin ausgelegt, die eigene Stimme in Abhängigkeit von einem Ausgangssignal des ersten Filters und des zweiten Filters zu erkennen. Beispielsweise kann die Vorrichtung Mittel aufweisen, um eine Differenz, einen Quotienten, oder eine normierte Differenz von Ausgangssignalen des ersten und des zweiten Filters zu bilden und eine Entscheidungseinheit, die bei Unter- bzw. Überschreiten eines vorbestimmten Grenzwerts die eigene Stimme erkennt.

Auf vorteilhafte Weise ermöglicht die Verwendung von räumlichen Filtern ein schnelles Erkennen der eigenen Stimme, wobei durch das Zusammenwirken mehrerer Filter gleichzeig die Zuverlässigkeit der Erkennung verbessert wird.

Weitere vorteilhafte Fortbildungen der Erfindung sind in den abhängigen Ansprüchen angegeben.

In einer günstigen Ausführungsform schwächen die ersten Filterparameter die eigene Stimme des Hörhilfegeräteträgers ab, indem eine Übertragungsfunktion für einen Schallweg vom Mund des Hörhilfegeräteträgers zum Hörhilfegerät abgebildet wird, und die Übertragungsfunktion für die Abschwächung herangezogen wird. Durch eine Abschwächung, für welche besagte Übertragungsfunktion herangezogen wird, lassen sich insbesondere individuelle räumliche bzw. physiologische Besonderheiten des Hörgeräteträgers, wie z.B. die Kopfform oder die Position des Hörgeräts beim Tragen berücksichtigen. Diese räumlichen Charakteristika des Schallwegs lassen sich hierbei am besten durch ein Ermitteln einer entsprechenden Übertragungsfunktion abbilden, anhand derer dann die Filterparameter bestimmbar sind. Überdies ist eine derartige Abbildung einer Übertragungsfunktion technisch sauber zu realisieren, was die Unterscheidungskraft der ersten Filterparameter erhöht, welche sich insbesondere im Grad der Abschwächung der eigenen Stimme des Hörhilfegeräteträgers im Vergleich zu anderen Audioquellen zeigt.

In einer vorteilhaften Ausführungsform schwächen die zweiten Filterparameter eine externe Audioquelle ab, indem eine Übertragungsfunktion für einen Schallweg von einer externen Audioquelle zum Hörhilfegerät abgebildet wird, und die Übertragungsfunktion für die Abschwächung herangezogen wird. Eine derartige Abbildung einer Übertragungsfunktion ist technisch sauber zu realisieren, was die Unterscheidungskraft der zweiten Filterparameter erhöht, welche sich insbesondere im Grad der Abschwächung der externen Audioquelle im Vergleich zu anderen Audioquellen, insbesondere der eigenen Stimme des Hörhilfegeräteträgers, zeigt.

In einer günstigen Ausführungsform des erfindungsgemäßen Verfahrens ist das erste Filter ein adaptives Filter. Insbesondere kann das adaptive Filter hierbei durch einen adaptiven Algorithmus realisiert sein, welcher adaptiv die ersten Filterkoeffizienten bestimmt. Mittels eines ersten Trainings des ersten Filters mit der eigenen Stimme eines Hörgeräteträgers als Audioquelle werden die ersten Filterparameter ermittelt, wobei das Hörhilfegerät anwendungsgemäß von dem Hörgeräteträger getragen wird.

Ein adaptives Filter ist auf vorteilhafte Weise in der Lage, sich an unterschiedliche Rahmenbedingungen anzupassen. Indem das adaptive erste Filter mit der Stimme des Hörgeräteträgers trainiert wird, wobei das Hörhilfegerät anwendungsgemäß vom Hörgeräteträger getragen wird, werden erste Filterparameter des adaptiven Filters an die Geometrie und die Eigenschaften des Kopfes angepasst und die Vorrichtung ist in der Lage, die eigene Stimme des Hörgeräteträgers sicherer zu erkennen.

Insbesondere findet das erste Training des ersten Filters durch mittels eines Protokolls definierten Prozesses statt, wobei der Prozess insbesondere bei der Einstellung des Hörgerätes bei einem Hörgeräteakustiker durchgeführt wird. Das Protokoll umfasst insbesondere bestimmte Sprachsequenzen, welche zur Ermittlung der Filterparameter besonders geeignet sind. In einer ebenfalls vorteilhaften Alternative zu einem definierten Trainingsprozess findet das erste Training im Rahmen des allgemeinen Fittings bei Hörgeräteakustiker statt. Dieser kann z.B. während einer normalen Sprachaktivität des Hörgeräteträgers über eine geeignete Schnittstelle zusätzliche Informationen an das Hörgerät übermitteln, so dass dieses die Sprachaktivität zum Ermitteln der ersten Filterparameter nutzen kann.

In einer weiter vorteilhaften Alternative führt der Hörgeräteträger den mittels des entsprechenden Protokolls definierten Prozess für das erste Training selbständig durch, wobei insbesondere mittels einer Fernsteuerung, beispielsweise über eine eigens für das Hörgerät vorgesehene Fernbedienung oder über eine entsprechende Applikation auf einem Smartphone des Hörgeräteträgers, das Hörgerät für die einzelnen Trainingsphasen des Prozesses angesteuert wird. In einer weiter vorteilhaften Ausgestaltung führt der Hörgeräteträger das erste Training während seiner normalen Sprachaktivität durch, also insbesondere ohne einen durch ein Protokoll exakt definierten Prozess, wobei insbesondere die zusätzliche Referenz-Information über eine vorliegende Sprachaktivität für eine Trainingsphase des ersten Trainings über eine geeignete Schnittstelle, eine eigens für das Hörgerät vorgesehene Fernbedienung oder über eine entsprechende Applikation auf dem Smartphone des Hörgeräteträgers übermittelt wird. Insbesondere führt der Hörgeräteträger mehrere verschiedene derartige Trainingsphasen des ersten Trainings in unterschiedlichen Hörsituationen durch, also beispielsweise zuhause, im Freien, in Gesprächssituationen, im Auto etc. Bevorzugt werden die dabei jeweils ermittelten Filterparameter als der entsprechenden Hörsituation zugehörig gespeichert, so dass für das Verfahren zur Erkennung einer eigenen Stimmaktivität die Menge jeweils im ersten Filter zu verwendenden ersten Filterparameter aus einer Obermenge an verschiedenen, nach Hörsituationen geordneten Mengen von ersten Filterparametern ausgewählt wird.

Insbesondere wird das erste Training auch vollautomatisch durchgeführt, beispielsweise anhand von einer detaillierten spektralen Analyse der Audiosignale. Eine derartige automatische spektrale Analyse ist für die Erkennung der Stimme selbst unter Laufzeit-Bedingungen nicht zufriedenstellend durchzuführen. Jedoch kann die detaillierte spektrale Analyse von Audiosignalen dazu genutzt werden, die ersten Filterparameter zu ermitteln, anhand derer eine hinreichend sichere Erkennung unter Laufzeit-Bedingungen möglich wird.

In einer bevorzugten Ausführungsform schwächen die ersten Filterparameter die eigene Stimme des Hörhilfegeräteträgers ab, indem die ersten Filterparameter ein Audiosignal eines der wenigstens zwei akusto-elektrischen Wandler filtern, und das gefilterte Audiosignal mit dem Audiosignal eines weiteren der wenigstens zwei akusto-elektrischen Wandler verglichen wird. Auf diese Weise ist es insbesondere möglich, durch Unterschiede der Phasenlage in den jeweiligen Audiosignalen der wenigstens zwei akusto-elektrischen Wandler Rückschlüsse auf den abzubildenden Schallweg zu gewinnen. Ein vergleichbares Vorgehen ist auch für die zweiten Filterparameter vorteilhaft.

Vorteilhafterweise werden hierbei für das Ermitteln der ersten Filterparameter diejenigen Parameterwerte herangezogen, durch welche ein Differenzsignal aus dem gefilterte Audiosignal und dem Audiosignal des weiteren akusto-elektrischen Wandlers minimiert wird. Man kann nun ein Audiosignal eines der akusto-elektrischen Wandler als ein Referenzsignal heranziehen, und die ersten Filterparameter, welche dem Audiosignal des anderen der akusto-elektrischen Wandler appliziert wird, so lange anpassen, bis die beiden Audiosignale näherungsweise identisch sind, und das Differenzsignal somit minimal ist.

In diesem Fall modifizieren die ersten Filterparameter das Audiosignal des entsprechenden akusto-elektrischen Wandlers derart, dass hierdurch der Schallweg von der Audioquelle, welche in diesem Fall durch den Mund des Hörgeräteträgers gebildet wird, zum jeweils anderen akusto-elektrischen Wandler abgebildet wird, wobei insbesondere für die Schallpropagation auch Besonderheiten im Frequenzgang der eigenen Stimme des Hörgeräteträgers, bedingt beispielsweise durch besondere charakteristische Merkmale der Stimme oder auch der Aussprache, in diese Abbildung mit Eingang finden.

Ein vergleichbares Vorgehen ist auch für die Ermittlung der zweiten Filterparameter mittels einer externen Audioquelle vorteilhaft. In diesem Fall kann zudem der Schallweg von einer externen Audioquelle in der mutmaßlich üblichen Position eines Gesprächspartners in einer Gesprächssituation abgebildet werden.

In einer zweckmäßigen Ausführungsform des erfindungsgemäßen Verfahrens ist das zweite Filter ein adaptives Filter. Insbesondere kann das adaptive Filter hierbei durch einen adaptiven Algorithmus realisiert sein, welcher adaptiv die zweiten Filterkoeffizienten bestimmt. Mittels eines zweiten Trainings des zweiten Filters mit einer externen Audioquelle in einer vorbestimmten Relativposition zu dem Hörhilfegerät werden die zweiten Filterparameter ermittelt.

Ein adaptives Filter ist auf vorteilhafte Weise in der Lage, sich an unterschiedliche Rahmenbedingungen anzupassen. Indem das adaptive zweite Filter mit einer externen Audioquelle in einer vorbestimmten Relativposition trainiert wird, ist das zweite Filter besser in der Lage, eine Schallquelle in der Relativposition zu filtern bzw. zu unterdrücken. Es ist insbesondere denkbar, dass das Training mit dem Hörhilfegerät anwendungsgemäß vom Hörgeräteträger getragen erfolgt, sodass das zweite Filter vorteilhafter Weise auch an die individuellen akustischen Eigenschaften des Kopfes des Hörgeräteträgers adaptiert wird.

Insbesondere findet das zweite Training des zweiten Filters durch mittels eines Protokolls definierten Prozesses statt, wobei der Prozess insbesondere bei der Einstellung des Hörgerätes bei einem Hörgeräteakustiker durchgeführt wird. Das Protokoll umfasst insbesondere bestimmte Sequenzen, welche der Hörgeräteakustiker spricht, die zur Ermittlung der Filterparameter besonders geeignet sind. In einer ebenfalls vorteilhaften Alternative zu einem definierten Trainingsprozess findet das zweite Training im Rahmen des allgemeinen Fittings beim Hörgeräteakustiker statt. Dieser kann z.B. während seiner normalen Sprachaktivität über eine geeignete Schnittstelle zusätzliche Informationen an das Hörgerät übermitteln, so dass dieses die Sprachaktivität zum Ermitteln der zweiten Filterparameter nutzen kann.

In einer weiter vorteilhaften Alternative führt der Hörgeräteträger den mittels des entsprechenden Protokolls definierten Prozess für das zweite Training selbständig durch, wobei insbesondere mittels einer Fernsteuerung, beispielsweise über eine eigens für das Hörgerät vorgesehene Fernbedienung oder über eine entsprechende Applikation auf einem Smartphone des Hörgeräteträgers, das Hörgerät für die einzelnen Trainingsphasen des Prozesses angesteuert wird. Die externe Audioquelle ist hierbei bevorzugt durch das mit der entsprechenden Applikation laufende Smartphone gegeben. In einer weiter vorteilhaften Ausgestaltung führt der Hörgeräteträger das zweite Training während normalen Gesprächssituationen durch, also insbesondere ohne einen durch ein Protokoll exakt definierten Prozess, wobei insbesondere die zusätzliche Referenz-Information über eine vorliegende Sprachaktivität für eine Trainingsphase des zweite Trainings über eine geeignete Schnittstelle, eine eigens für das Hörgerät vorgesehene Fernbedienung oder über eine entsprechende Applikation auf dem Smartphone des Hörgeräteträgers übermittelt wird. Insbesondere führt der Hörgeräteträger mehrere verschiedene derartige Trainingsphasen des zweiten Trainings in unterschiedlichen Hörsituationen durch. Bevorzugt werden die dabei jeweils ermittelten Filterparameter als der entsprechenden Hörsituation zugehörig gespeichert, so dass für das Verfahren zur Erkennung einer eigenen Stimmaktivität die Menge jeweils im zweiten Filter zu verwendenden zweiten Filterparameter aus einer Obermenge an verschiedenen, nach Hörsituationen geordneten Mengen von zweiten Filterparametern ausgewählt wird.

Insbesondere wird das zweite Training auch vollautomatisch durchgeführt, beispielsweise anhand von einer detaillierten spektralen Analyse der Audiosignale. Eine derartige automatische spektrale Analyse ist für die Erkennung der Stimme selbst unter Laufzeit-Bedingungen nicht zufriedenstellend durchzuführen. Jedoch kann die detaillierte spektrale Analyse von Audiosignalen dazu genutzt werden, die zweiten Filterparameter zu ermitteln, anhand derer eine hinreichend sichere Erkennung unter Laufzeit-Bedingungen möglich wird.

In einer weiter vorteilhaften Ausführungsform des erfindungsgemäßen Verfahrens erfolgt das Erkennen der eigenen Stimme in Abhängigkeit von einem Verhältnis von Amplituden der Ausgangssignale des ersten Filters und des zweiten Filters.

Auf vorteilhafte Weise erhöht die Verwendung von zwei unterschiedlichen Signalen die Zuverlässigkeit der Erkennung der eigenen Stimme. In dem das Verhältnis der Amplituden genutzt wird, findet eine Normierung auf einen Umgebungsgeräuschpegel statt, die ein Erkennen sowohl unter lauten Bedingungen als auch unter leisen Bedingungen ermöglicht.
In einer denkbaren Ausführungsform des erfindungsgemäßen Verfahrens wird das Verfahren nur in einer Teilmenge von einer Mehrzahl von disjunkten oder nur teilweise überlappenden Frequenzbereichen der Audiosignale ausgeführt. Auf vorteilhafte Weise ist das Erkennen der eigenen Stimme in bestimmten Frequenzbereichen leichter, die sich durch die Stimmfrequenzen als auch durch akustische Eigenschaften des Kopfes ergeben. Wird das erfindungsgemäße Verfahren daher in einem oder mehreren vorbestimmten Teilfrequenzband bzw. Bändern des akustischen Spektrums ausgeführt, kann sowohl die Erkennungssicherheit verbessert als auch die benötigte Rechenleistung gegenüber einer Anwendung in allen Teilfrequenzbändern verringert werden.

In einer besonders zweckmäßigen Ausführungsform Verfahren wird das Ausgangssignal des ersten Filters gebildet durch ein Differenzsignal aus einem mit den ersten Filterparametern gefilterten Audiosignal eines der wenigstens zwei akusto-elektrischen Wandler und einem Audiosignal eines weiteren der wenigstens zwei akusto-elektrischen Wandler, wobei das Ausgangssignal des zweiten Filters gebildet wird durch ein Differenzsignal aus einem mit den zweiten Filterparametern gefilterten Audiosignal eines der wenigstens zwei akusto-elektrischen Wandler und einem Audiosignal eines weiteren der wenigstens zwei akusto-elektrischen Wandler. Hierdurch lässt sich eine jeweilige Abschwächung eines Signals, welches von einer unbekannten Audioquelle stammt, durch die beiden Filter besonders einfach vergleichen.

In einer weiter bevorzugten Ausführungsform des erfindungsgemäßen Verfahrens schwächt das zweite Filter Signale von einer Audioquelle am stärksten ab, die bei einem anwendungsgemäßen Tragen vor dem Träger des Hörhilfegeräts angeordnet ist.

Vorteilhafter Weise befindet sich üblicherweise ein Gesprächspartner in Blickrichtung vor dem Sprecher bzw. Zuhörer. Indem der zweite Filter Signale in dieser Richtung abschwächt, ist bei einem Gespräch der Wechsel zwischen eigenem Sprechen und einem Sprechen des Gesprächspartners in Blickrichtung besonders zuverlässig zu erkennen.

In einer weiter günstigen Ausführungsform des erfindungsgemäßen Verfahrens weist die Vorrichtung eine Mehrzahl an zweiten Filtern auf, die jeweils Signale von Audioquelle in unterschiedlichen Relativpositionen zu dem Hörhilfegerät am stärksten abschwächen.

Damit ist es in dem erfindungsgemäßen Verfahren auch möglich, Audioquellen in unterschiedlichen Richtungen zu unterscheiden und auf vorteilhafte Weise auch in einem Gespräch mit mehreren Gesprächspartnern die eigene Stimme sicher zu erkennen.

In einer weiter zweckmäßigen Ausführungsform des erfindungsgemäßen Verfahrens weist dieses weiterhin den Schritt auf, ein Hintergrundstörgeräusch in Signalen des ersten und des zweiten akusto-elektrischen Wandlers zu reduzieren, bevor diese dem ersten Filter und dem zweiten Filter zugeführt werden.

Indem Hintergrundstörgeräusche in den Signalen des ersten und zweiten akusto-elektrischen Wandlers reduziert werden, können das erste und zweite Filter eine Quelle im Nahfeld und eine Quelle im Fernfeld besser trennen und so die Zuverlässigkeit des Erkennens der eigenen Stimme weiter verbessern.

Die abhängigen Ansprüche zu der erfindungsgemäßen Vorrichtung teilen die Vorteile der korrespondierenden Verfahrensansprüche.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- Fig. 1: eine beispielhafte schematische Darstellung eines erfindungsgemäßen Hörhilfegeräts;
- Fig. 2: ein schematisches Ablaufdiagramm einer Ausführungsform des erfindungsgemäßen Verfahrens;
- Fig. 3: eine Vorrichtung zum Erkennen der eigenen Stimme des Hörgeräteträgers.

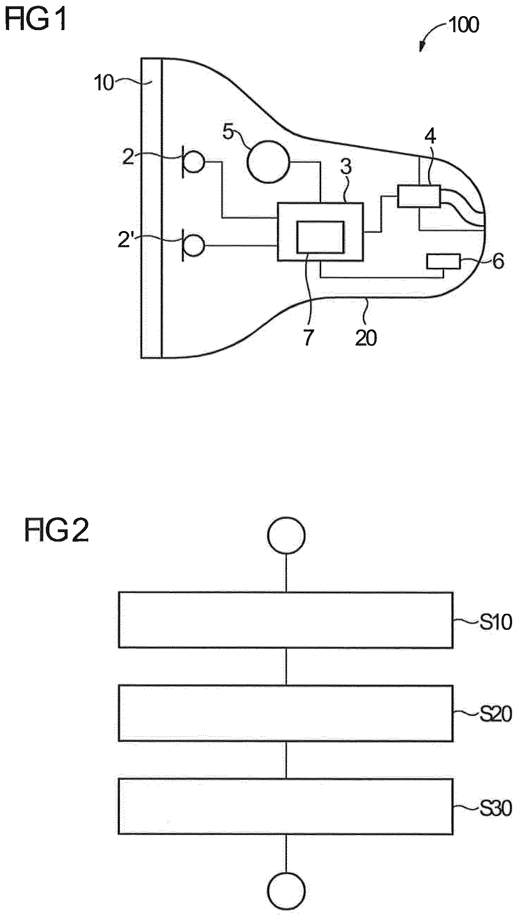

Fig. 1 zeigt den prinzipiellen Aufbau eines erfindungsgemäßen Hörhilfegeräts 100. In ein Hörhilfegerätegehäuse 10, 20 sind ein oder mehrere Mikrofone, auch als akusto-elektrische Wandler 2, 2' bezeichnet, zur Aufnahme des Schalls bzw. akustischer Signale aus der Umgebung eingebaut. Bei dem Hörhilfegerät kann es sich prinzipiell um ein Hinter-dem-Ohr (HdO) oder In-dem-Ohr (IdO) handeln. Die Mikrofone 2, 2' sind akusto-elektrische Wandler 2, 2' zur Umwandlung des Schalls in erste elektrische Audiosignale. Eine Signalverarbeitungseinrichtung 3, die ebenfalls in dem Hörhilfegerätegehäuse 10, 20 angeordnet ist, verarbeitet die ersten Audiosignale. Das Ausgangssignal der Signalverarbeitungseinrichtung 3 wird an einen Lautsprecher bzw. Hörer 4 übertragen, der ein akustisches Signal ausgibt. Bei einem HdO-Hörhilfegerät wird der Schall gegebenenfalls über einen Schallschlauch, der mit einer Otoplastik im Gehörgang fixiert ist, zum Trommelfell des Geräteträgers übertragen. Es ist aber auch ein anderer elektromechanischer Wandler denkbar, wie beispielweise ein Knochenleitungshörer. Die Energieversorgung des Hörhilfegeräts 100 und insbesondere der Signalverarbeitungseinrichtung 3 erfolgt durch eine ebenfalls in das Hörhilfegerätegehäuse 10, 20 integrierte Batterie 5.

Das Hörhilfegerät 100 weist ferner eine Vorrichtung 7 zum Erkennen der eigenen Stimme des Hörgeräteträgers auf. Die Vorrichtung 7 zum Erkennen der eigenen Stimme des Hörgeräteträgers kann als separate Einheit ausgeführt sein und dazu erste Audiosignale mehrerer akusto-elektrischer Wandler 2, 2' über eine Signalverbindung von der Signalverarbeitungseinrichtung 3 beziehen.

In der dargestellten Ausführungsform des erfindungsgemäßen Hörhilfegeräts ist die Vorrichtung 7 zum Erkennen der eigenen Stimme jedoch in der Signalverarbeitungseinrichtung 3 realisiert, als eigene Schaltung oder auch als ausgeführte Programmanweisungen.

In einer bevorzugten Ausführungsform der erfindungsgemäßen Vorrichtung 7 ist die Vorrichtung 7 zum Erkennen der eigenen Stimme des Hörgeräteträgers in der Lage, die Stimme in kurzer Zeit, das heißt innerhalb der Zeitdauer eines einzelnen Lauts oder noch schneller zu erkennen, beispielsweise innerhalb von weniger als 100 ms oder 50 ms. Dies ist nur möglich, wenn das Hörhilfegerät besonders schnell erkennbare Eigenschaften der Stimme nutzt.

Dabei nutzt die erfindungsgemäße Vorrichtung 7 die Richtung der Schallquelle und/oder eine Symmetrie. So wird mittels Audiosignalen mehrerer akusto-elektrischer Wandler 2, 2' und erster und zweiter Filter Ausgangssignale der Filter erzeugt, die unterschiedliche Richtcharakteristik aufweisen. Dazu können das erste und/oder das zweite Filter beispielsweise die jeweiligen Eingangssignale verzögern und mit unterschiedlieher Gewichtung zu jeder unterschiedlichen Verzögerungszeit aufaddieren. Die einzelnen Gewichtungen sind dabei Filterparameter des jeweiligen Filters.

Dabei ist es denkbar, dass beide akusto-elektrischen Wandler 2, 2' beabstandet zueinander in einem Hörhilfegerät 100 angeordnet sind. Es ist aber genauso denkbar, dass das Hörhilfegerät 100 Teil eines binauralen Hörhilfesystems aus zwei Hörhilfegeräten 100 ist. Das Hörhilfegerät 100 weist dann eine drahtlose Signalübertragungseinrichtung 6 auf, über die es von dem jeweils anderen Hörhilfegerät ein Audiosignal eines akusto-elektrischen Wandlers 2 empfängt und an die Vorrichtung 7 weiterleitet. Auf diese Weise sind die beiden akusto-elektrischen Wandler 2, 2' weit voneinander symmetrisch zu dem Kopf eines Hörgeräteträgers angeordnet, was eine Richtungsbestimmung für niederfrequente Schallwellen mit Wellenlängen im Bereich von mehreren Zentimetern, beispielsweise von 1 bis 10 cm erleichtert. Auch ist in diesem Fall der Mund als Quelle der eigenen Stimme symmetrisch zu den beiden akusto-elektrischen Wandlern 2, 2' angeordnet.

In einer Ausführungsform ist der erste Filter mit ersten Filterparametern dazu ausgelegt, eine Audioquelle in einem Nahbereich des Hörhilfegeräts 100 abzuschwächen. Dabei ist es denkbar, dass diese Filterparameter bereits bei dem Design der Vorrichtung 7 durch Modellrechnungen bestimmt oder bei einem späteren Fitting in einem Messraum mit Signalquellen ermittelt werden.

Die optimalen Filterkoeffizienten zur Dämpfung der eigenen Stimme beinhalten sowohl eine Betrags- als auch eine Phasenkomponente. Dies bedeutet, dass nicht nur die Richtung eine Rolle spielt, was bei einer Fernfeldannahme der Signale genügen würde.

In einer Ausführungsform ist der zweite Filter mit den zweiten Filterparametern dazu ausgelegt, eine Audioquelle in einem Fernfeld des Hörhilfegeräts abzuschwächen.

Diese Koeffizienten, für die bestmögliche Dämpfung externer Signale, unterscheiden sich sowohl in der Betrags- als auch in der Phasenkomponente von den ersten Filterkoeffizienten zur Dämpfung der eigenen Stimme.

Die eigene Stimme des Hörgeräteträgers wird durch die Vorrichtung 7 anhand der beiden Ausgangssignale des ersten Filters und des zweiten Filters erkannt. So ist es möglich, die eigene Stimme zu erkennen, wenn die Differenz oder ein Quotient der beiden Ausgangssignale einen vorbestimmten Wert unter bzw. überschreitet. Wenn beispielsweise der Ausgangswert der Ausgangspegel des zweiten Filters größer als der des ersten Filters ist, also der Signalpegel im Nahfeld den im Fernfeld übersteigt, so kann auf ein Erkennen der eigenen Stimme geschlossen werden, wenn der Quotient aus den Signalpegeln des zweiten Filters geteilt durch den Signalpegel des ersten Filters einen vorbestimmten Wert übersteigt. Gleiches gilt, wenn die Differenz des Signalpegels zweiten Filters minus des Signalpegels des ersten Filters einen vorbestimmten Wert übersteigt.

In einer Ausführungsform ist es auch denkbar, die Differenz der beiden Ausgangsamplituden durch den Ausgangspegel des zweiten Filters zu teilen. Dabei erfolgt, wie bereits zuvor bei der Quotientenbildung, eine Normierung des Signals in Bezug auf die Umgebungsgeräusche, die beispielsweise ein Erkennen in einer lauten Umgebung erschwert und der Vorrichtung 7 ermöglicht, eine derartige Situation zu berücksichtigen.

In möglichen Ausführungsformen sind das erste und/oder das zweite Filter adaptive Filter. Adaptive Filter sind beispielsweise mittels eines NMLS-Algorithmus in der Lage, ihre Parameter so anzupassen, dass bei einem vorgegebenen Eingangssignal das Ausgangssignal einen Maximalwert bzw. einen Minimalwert annimmt. So ist es auf vorteilhafte Weise möglich, den ersten Filter am Kopf des Hörgeräteträgers oder in einer Messumgebung zu trainieren, ein Signal der eigenen Stimme möglichst stark abzuschwächen. In gleicher Weise ist es möglich, den zweiten Filter zu trainieren, ein Signal einer Audioquelle in einer vorbestimmten Position, zum Beispiel in Blickrichtung des Hörgeräteträgers, wenn das Hörgerät 100 mit der Vorrichtung 7 am Kopf getragen wird, möglichst stark zu unterdrücken. Durch das Training sind die Filter in der Lage, auch Eigenschaften des Kopfes des Hörgeräteträgers zu berücksichtigen. Das Trainieren kann beispielsweise beim Fitting oder auch in der gewohnten Umgebung des Hörgeräteträgers (vorzugsweise für das erste Filter) erfolgen. Die Vorrichtung 7 wird im Folgenden mit den ermittelten ersten und zweiten Filterparametern für das erste und/oder zweite adaptive Filter betrieben, um das Erkennen zu verbessern.

Weiterhin ist es möglich, mehrere zweite Filter mit vorbestimmten oder vorzugsweise adaptiven Filtern vorzusehen, um ein Erkennen der eigenen Stimme auch in Situationen mit mehreren Sprechern zu ermöglichen.

Die Signalverarbeitungseinrichtung 3 kann auch die Signale der akusto-elektrischen Wandler 2, 2' mittels Filterbank oder Fourier-Transformation in eine Mehrzahl von disjunkten oder nur teilweise überlappenden Frequenzbereichen aufteilen. Vorteilhafter Weise erkennt die Vorrichtung 7 dann nur in einer Teilmenge der Frequenzbereiche die eigene Stimme, d.h. das erfindungsgemäße Verfahren wird nur in dieser Teilmenge der mehreren Frequenzbereiche ausgeführt, um Prozessorresourcen einzusparen. Vorzugsweise werden dazu Frequenzbereiche ausgewählt, die aufgrund der in der Stimme auftretenden Frequenzen und der Ausbreitungseigenschaften in der Nähe des Kopfes besonders geeignet sind, zwischen der eigenen Stimme des Hörgeräteträgers und einer anderen Stimme zu unterscheiden.

Die Vorrichtung 7 weist eine besonders hohe Zuverlässigkeit beim Erkennen der eigenen Stimme auf, wenn bereits vor der Vorrichtung 7 Störgeräusche aus den Audiosignalen der akusto-elektrischen Wandler 2, 2' entfernt oder zumindest reduziert werden. In einer Ausführungsform der erfindungsgemäßen Vorrichtung 7 ist daher ein weiterer Filter vorgesehen. Dieser Filter kann ebenfalls in der Signalverarbeitungseinrichtung 3 vorgesehen sein und zum Beispiel mittels eines adaptiven Filters Störgeräusche reduzieren.

Ein schematisches Ablaufdiagramm für eine beispielhafte Ausführungsform des erfindungsgemäßen Verfahrens ist in Fig. 2 dargestellt.

In einem Schritt S10 werden erste Filterparameter des ersten Filters ermittelt, wobei die ersten Filterparameter dazu ausgelegt sind, eine Audioquelle in einem Nahbereich des Hörhilfegeräts abzuschwächen. Der Schritt S10 kann beispielsweise bereits beim Design der Vorrichtung 7 erfolgen. Es ist aber auch denkbar, dass der Schritt 10 beim Fitting eines Hörhilfegeräts 100 mit einer Vorrichtung 7 erfolgt. Dabei kann der Schritt S10 durch ein Training mit der eigenen Stimme erfolgen, wenn das erste Filter ein adaptives Filter ist.

In einem Schritt S20 werden zweite Filterparameter des zweiten Filters ermittelt, wobei die zweiten Filterparameter dazu ausgelegt sind, eine Audioquelle in einem Fernfeld des Hörhilfegeräts abzuschwächen. Auch der Schritt S20 kann beispielsweise bereits beim Design der Vorrichtung 7 erfolgen. Es ist aber ebenso wie bei Schritt S10 denkbar, dass der Schritt S20 beim Fitting eines Hörhilfegeräts 100 mit einer Vorrichtung 7 erfolgt. Dabei kann der Schritt S20 durch ein Training mit einer oder mehreren Audiosignalquellen in einer vorbestimmten Relativposition zu den akusto-elektrischen Wandlern 2 erfolgen, wenn das zweite Filter ein adaptives Filter ist.

In einem Schritt S30 wird die Vorrichtung 7 betrieben, vorzugsweise in einem Hörhilfegerät 100, wobei der erste Filter mit den ersten Filterparametern arbeitet und der zweiten Filter mit den zweiten Filterparametern.

In einem Schritt S30 wird die eigene Stimme des Hörgeräteträgers des Hörhilfegeräts 100 mit der Vorrichtung 7 in Abhängigkeit von einem Ausgangssignal des ersten Filters und des zweiten Filters erkannt. Verschiedene beispielhafte Möglichkeiten, wie dies erfolgen kann, sind bereits zur Fig. 1 angegeben.

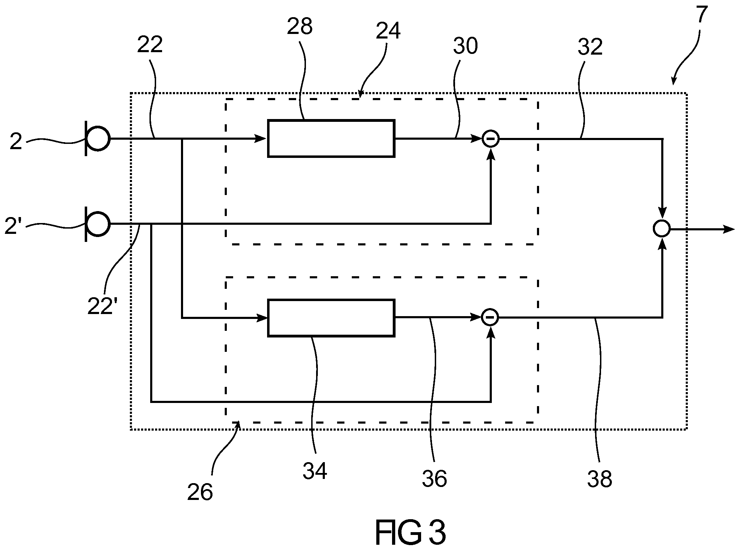

In Fig. 3 ist schematisch in einem Blockschaltbild eine Vorrichtung 7 zum Erkennen der eigenen Stimme des Hörgeräteträgers dargestellt. Die Vorrichtung 7 empfängt dabei Audiosignale 22, 22' von den akusto-elektrischen Wandlern 2, 2'. Die Audiosignale 22, 22' werden des Weiteren in nicht näher dargestellter Weise zur Signalverarbeitung an die Signalverarbeitungseinrichtung übermittelt. Beide Audiosignale 22, 22' werden nun jeweils einem ersten Filter 24 und einem zweiten Filter 26 zugeführt. Im ersten Filter 24 werden erste Filterparameter 28 auf das Audiosignal 22 des akusto-elektrischen Wandlers 2 angewandt, und anschließend aus dem mit den ersten Filterparametern 28 gefilterten Audiosignal 30 und dem Audiosignal 22' des akusto-elektrischen Wandlers 2' ein Differenzsignal 32 gebildet. Im zweiten Filter 26 werden zweite Filterparameter 34 auf das Audiosignal 22 des akusto-elektrischen Wandlers 2 angewandt, und anschließend aus dem mit den zweiten Filterparametern 34 gefilterten Audiosignal 36 und dem Audiosignal 22' des akusto-elektrischen Wandlers 2' ein Differenzsignal 38 gebildet. Das Anwenden der ersten Filterparameter 28 bzw. der zweiten Filterparameter 34 auf das Audiosignal 22 kann hierbei beispielsweise jeweils als ein FIR-Filter realisiert sein.

Das Differenzsignal 32 bildet nun das Ausgangssignal des ersten Filters 24, das Differenzsignal 38 das Ausgangssignal des zweiten Filters 26. Die Amplituden der beiden Ausgangssignale 32, 38 des ersten Filters 24 und des zweiten Filters 26 werden nun miteinander verglichen. Die ersten Filterparameter 28 sind hierbei in einem Trainingsprozess derart eingestellt worden, dass durch das gefilterte Audiosignal 30 möglichst exakt den Schallweg vom Mund des Hörgeräteträgers zum Hörgerät abgebildet wird, und dabei auch spektrale Besonderheiten der Stimme des Hörgeräteträgers und daraus resultierende Absorptionen durch seinen Kopf berücksichtigen kann. Die zweiten Filterparameter 34 sind in einem vergleichbaren Trainingsprozess derart eingestellt worden, dass durch das gefilterte Audiosignal 36 möglichst exakt den Schallweg von einer externen Audioquelle zum Hörgerät abgebildet wird, wobei hierfür als Position der externen Audioquelle eine übliche Position eines Gesprächspartners in einer Gesprächssituation vorausgesetzt werden kann.

Durch einen Vergleich der Amplituden der Ausgangssignale 32, 38 des ersten Filters 24 und des zweiten Filters 26 kann nun eine Entscheidung getroffen werden, ob die durch die akusto-elektrischen Wandler 2, 2' erzeugten Audiosignale 22, 22' von der eigenen Stimme des Hörgeräteträgers stammen oder nicht. Im ersten Fall weist infolge der entsprechenden Einstellung der ersten Filterparameter 28 das Ausgangssignal 32 des ersten Filters 24 eine geringe Amplitude auf, wohingegen das Ausgangssignal 38des zweiten Filters 26, da entsprechend die zweiten Filterparameter 34 einen gänzlich anderen Schallweg abbilden, keine deutliche Abschwächung aufweist. Somit kann durch die Vorrichtung 7 ein Vorliegen einer Stimmaktivität des Hörgeräteträgers entschieden werden.

Umgekehrt werden durch eine externe Audioquelle hervorgerufene Audiosignale 22, 22' durch das zweite Filter 26 selbst dann noch hinreichend abgeschwächt, wenn die Position der externen Audioquelle nicht der für das Ermitteln der zweiten Filterparameter 34 verwendeten Position der Referenz-Audioquelle entspricht. Insbesondere ist eine deutlich stärkere Abschwächung derartiger Audiosignale durch das zweite Filter 26 zu erwarten als durch das erste Filter 24, da hierfür insbesondere auch die unterschiedlichen Phasenlagen des Schalls auf dem jeweiligen Schallweg berücksichtigt werden, welche Eingang in die ersten Filterparameter 28 und die zweiten Filterparameter 34 finden. Insbesondere kann hierbei im zweiten Filter auch das Audiosignal 22' mit den zweiten Filterparametern 34 gefiltert werden, so dass in die Bildung des Differenzsignals 36 das Audiosignal 22 des akusto-elektrischen Wandlers 2 unverändert, also insbesondere ungefiltert eingeht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, der durch die unabhängigen Ansprüche definiert wird, zu verlassen.

## Patentansprüche

1. Verfahren zum schnellen Erkennen der eigenen Stimme eines Hörhilfegeräteträgers für ein Hörhilfegerät (100), wobei das Hörhilfegerät (100) Audiosignale von mindestens zwei akusto-elektrischen Wandlern (2, 2') empfängt und eine Vorrichtung (7) aufweist, die ein erstes Filter (24) und ein zweites Filter (26) zur räumlichen Trennung aufweist und die in Signalverbindung mit den akusto-elektrischen Wandlern (2, 2') stehen, wobei das Verfahren die Schritte aufweist:
Ermitteln von ersten Filterparametern (28) des ersten Filters (24), wobei die ersten Filterparameter (24) dazu ausgelegt sind, die eigene Stimme des Hörhilfegeräteträgers abzuschwächen, wobei das erste Filter (24) ein adaptives Filter ist und mittels eines ersten Trainings des ersten Filters (24) mit der eigenen Stimme eines Hörgeräteträgers die ersten Filterparameter (28) ermittelt werden, wobei das Hörhilfegerät (100) anwendungsgemäß von dem Hörgeräteträger getragen wird;
Ermitteln von zweiten Filterparametern (34) des zweiten Filters (26), wobei die zweiten Filterparameter (34) dazu ausgelegt sind, eine externe Audioquelle abzuschwächen;
Betreiben der Vorrichtung (7), wobei das erste Filter (24) mit den ersten Filterparametern (28) arbeitet und das zweite Filter (26) mit den zweiten Filterparametern (34);
Erkennen der eigenen Stimme in Abhängigkeit von einem Ausgangssignal (32, 38) des ersten Filters (24) und des zweiten Filters (26) .

2. Verfahren nach Anspruch 1, wobei die ersten Filterparameter (28) die eigene Stimme des Hörhilfegeräteträgers abschwächen, indem eine Übertragungsfunktion für einen Schallweg vom Mund des Hörhilfegeräteträgers zum Hörhilfegerät (100) abgebildet wird, und die Übertragungsfunktion für die Abschwächung herangezogen wird.

3. Verfahren nach Anspruch 1 oder Anspruch 2, wobei die zweiten Filterparameter (34) eine externe Audioquelle abschwächen, indem eine Übertragungsfunktion für einen Schallweg von einer externen Audioquelle zum Hörhilfegerät (100) abgebildet wird, und die Übertragungsfunktion für die Abschwächung herangezogen wird.

4. Verfahren nach einem der vorhergehenden Ansprüche, wobei die ersten Filterparameter (28) die eigene Stimme des Hörhilfegeräteträgers abschwächen, indem die ersten Filterparameter (28) ein Audiosignal (22) eines der wenigstens zwei akusto-elektrischen Wandler (2) filtern, und das gefilterte Audiosignal (30) mit dem Audiosignal (22') eines weiteren der wenigstens zwei akusto-elektrischen Wandler (2') verglichen wird.

5. Verfahren nach Anspruch 4, wobei für das Ermitteln der ersten Filterparameter (28) diejenigen Parameterwerte herangezogen werden, durch welche ein Differenzsignal (32) aus dem gefilterte Audiosignal (30) und dem Audiosignal (22') des weiteren akusto-elektrischen Wandlers (2') minimiert wird.

6. Verfahren nach einem der vorhergehenden Ansprüche, wobei das zweite Filter (26) ein adaptives Filter ist und mittels eines zweiten Trainings des zweiten Filters (26) mit einer externen Audioquelle in einer vorbestimmten Relativposition zu dem Hörhilfegerät (100) die zweiten Filterparameter (34) ermittelt werden.

7. Verfahren nach Anspruch 6, wobei die zweiten Filterparameter (34) eine externe Audioquelle abschwächen, indem die zweiten Filterparameter (34) ein Audiosignal (22) eines der wenigstens zwei akusto-elektrischen Wandler (2) filtern, und das gefilterte Audiosignal (36) mit dem Audiosignal (22') eines weiteren der wenigstens zwei akusto-elektrischen Wandler (2') verglichen wird.

8. Verfahren nach Anspruch 7, wobei für das Ermitteln der zweiten Filterparameter (34) diejenigen Parameterwerte herangezogen werden, durch welche ein Differenzsignal (38) aus dem gefilterte Audiosignal (36) und dem Audiosignal (22') des weiteren akusto-elektrischen Wandlers (2') minimiert wird.

9. Verfahren nach einem der vorhergehenden Ansprüche, wobei das Erkennen der eigenen Stimme in Abhängigkeit von einem Verhältnis von Amplituden der Ausgangssignale (32, 38) des ersten Filters (24) und des zweiten Filters (26) erfolgt.

10. Verfahren nach Anspruch 9, wobei das Ausgangssignal (32) des ersten Filters (24) gebildet wird durch ein Differenzsignal (32) aus einem mit den ersten Filterparametern (28) gefilterten Audiosignal (30) eines der wenigstens zwei akusto-elektrischen Wandler (2) und einem Audiosignal (22') eines weiteren der wenigstens zwei akusto-elektrischen Wandler (2'), und wobei das Ausgangssignal (38) des zweiten Filters (26) gebildet wird durch ein Differenzsignal (38) aus einem mit den zweiten Filterparametern (34) gefilterten Audiosignal (36) eines der wenigstens zwei akusto-elektrischen Wandler (2) und einem Audiosignal (22') eines weiteren der wenigstens zwei akusto-elektrischen Wandler (2').

11. Verfahren nach einem der vorhergehenden Ansprüche, wobei das Verfahren nur in einer Teilmenge von einer Mehrzahl von disjunkten oder nur teilweise überlappenden Frequenzbereichen der Audiosignale (22, 22') ausgeführt wird.

12. Verfahren nach einem der vorhergehenden Ansprüche, wobei das zweite Filter (26) Signale von einer Audioquelle am stärksten abschwächt, die bei einem awnnsgemäßen Tragen des Hörhilfegeräts (100) vor dem Träger des Hörhilfegeräts angeordnet ist.

13. Verfahren nach einem der Ansprüche 1 bis 11, wobei die Vorrichtung (7) eine Mehrzahl an zweiten Filtern (26) aufweist, die jeweils Signale von Audioquelle in unterschiedlichen Relativpositionen zu dem Hörhilfegerät (100) am stärksten abschwächen.

14. Verfahren nach einem der vorhergehenden Ansprüche, wobei das Verfahren weiterhin den Schritt aufweist, ein Hintergrundstörgeräusch in Signalen des ersten (2) und des zweiten akusto-elektrischen Wandlers (2') zu reduzieren, bevor diese dem ersten Filter (24) und dem zweiten Filter (26) zugeführt werden.

15. Vorrichtung zum schnellen Erkennen einer eigenen Stimme eines Hörhilfegeräteträgers für ein Hörhilfegerät (100), wobei das Hörhilfegerät (100) ausgelegt ist, Audiosignale (22, 22') von mindestens zwei akusto-elektrischen Wandlern (2, 2') zu empfangen, wobei die Vorrichtung ein erstes Filter (24) und ein zweites Filter (26) zur räumlichen Trennung aufweist, die in Signalverbindung mit den akusto-elektrischen Wandlern (2, 2') stehen, wobei das erste Filter (24) ein adaptives Filter ist und dazu ausgelegt ist, die eigene Stimme eines Hörhilfegeräteträgers abzuschwächen und das zweite Filter (26) dazu ausgelegt ist, eine externe Audioquelle abzuschwächen; wobei die Vorrichtung (7) weiterhin ausgelegt ist, die eigene Stimme in Abhängigkeit von einem Ausgangssignal (32, 38) des ersten Filters (24) und des zweiten Filters (26) zu erkennen, und wobei die Vorrichtung (7) ferner dazu ausgelegt ist, die ersten Filterparameter (28) durch ein Training mit der eigenen Stimme des Hörgeräteträgers zu ermitteln, wenn das Hörhilfegerät (100) anwendungsgemäß von dem Hörgeräteträger getragen wird.

16. Vorrichtung nach Anspruch 15, wobei das erste Filter (24) ein adaptives Filter mit ersten Filterparametern (28) ist, welche ein Audiosignal (22) eines der wenigstens zwei akusto-elektrischen Wandler (2) filtern, und aus dem mit den ersten Filterparametern (28) gefilterten Audiosignal (30) und dem Audiosignal (22') eines weiteren der wenigstens zwei akusto-elektrischen Wandler (2') ein Differenzsignal als Ausgangssignal (32) des ersten Filters (24) gebildet wird.

17. Vorrichtung nach Anspruch 15 oder 16, wobei das zweite Filter (26) ein adaptives Filter mit zweiten Filterparametern (34) ist, welche ein Audiosignal (22) eines der wenigstens zwei akusto-elektrischen Wandler (2) filtern, und aus dem mit den zweiten Filterparametern (34) gefilterten Audiosignal (36) und dem Audiosignal (22') eines weiteren der wenigstens zwei akustö-elektrischen Wandler (2') ein Differenzsignal als Ausgangssignal (38) des zweiten Filters (26) gebildet wird.

18. Hörhilfegerät mit einer Vorrichtung (7) nach einem der Ansprüche 15 bis 17.

## Claims

1. Method for fast recognition of the own voice of a hearing aid wearer for a hearing aid (100), wherein the hearing aid (100) receives audio signals from at least two acoustoelectric transducers (2, 2') and has an apparatus (7) that has a first filter (24) and a second filter (26) for spatial separation that are connected for signaling purposes to the acoustoelectric transducers (2, 2'), wherein the method has the steps of:
ascertainment of first filter parameters (28) of the first filter (24), wherein the first filter parameters (24) are designed to attenuate the own voice of the hearing aid wearer, wherein the first filter (24) is an adaptive filter and a first training of the first filter (24) with the own voice of a hearing device wearer is used to ascertain the first filter parameters (28), wherein the hearing aid (100) is worn by the hearing device wearer in accordance with the intended use;
ascertainment of second filter parameters (34) of the second filter (26), wherein the second filter parameters (34) are designed to attenuate an external audio source;
operation of the apparatus (7), wherein the first filter (24) operates with the first filter parameters (28) and the second filter (26) with the second filter parameters (34);
recognition of the wearer's own voice on the basis of an output signal (32, 38) from the first filter (24) and the second filter (26).

2. Method according to Claim 1, wherein the first filter parameters (28) attenuate the own voice of the hearing aid wearer by virtue of a transfer function being mapped for a sound path from the mouth of the hearing aid wearer to the hearing aid (100), and the transfer function being used for the attenuation.

3. Method according to Claim 1 or Claim 2, wherein the second filter parameters (34) attenuate an external audio source by virtue of a transfer function being mapped for a sound path from an external audio source to the hearing aid (100), and the transfer function being used for the attenuation.

4. Method according to one of the preceding claims, wherein the first filter parameters (28) attenuate the own voice of the hearing aid wearer by virtue of the first filter parameters (28) filtering an audio signal (22) from one of the at least two acoustoelectric transducers (2), and the filtered audio signal (30) being compared with the audio signal (22') from another of the at least two acoustoelectric transducers (2').

5. Method according to Claim 4, wherein the ascertainment of the first filter parameters (28) involves those parameter values being used that minimize a difference signal (32) from the filtered audio signal (30) and the audio signal (22') from the further acoustoelectric transducer (2').

6. Method according to one of the preceding claims, wherein the second filter (26) is an adaptive filter and a second training of the second filter (26) with an external audio source at a predetermined relative position in relation to the hearing aid (100) is used to ascertain the second filter parameters (34).

7. Method according to Claim 6, wherein the second filter parameters (34) attenuate an external audio source by virtue of the second filter parameters (34) filtering an audio signal (22) from one of the at least two acoustoelectric transducers (2), and the filtered audio signal (36) being compared with the audio signal (22') from another of the at least two acoustoelectric transducers (2').

8. Method according to Claim 7, wherein the ascertainment of the second filter parameters (34) involves those parameter values being used that minimize a difference signal (38) from the filtered audio signal (36) and the audio signal (22') from the further acoustoelectric transducer (2').

9. Method according to one of the preceding claims, wherein the recognition of the wearer's own voice is effected on the basis of a ratio of amplitudes of the output signals (32, 38) from the first filter (24) and the second filter (26).

10. Method according to Claim 9, wherein the output signal (32) from the first filter (24) is formed by a difference signal (32) from an audio signal (30) from one of the at least two acoustoelectric transducers (2), which audio signal is filtered with the first filter parameters (28), and an audio signal (22') from another of the at least two acoustoelectric transducers (2'), and wherein the output signal (38) from the second filter (26) is formed by a difference signal (38) from an audio signal (36) from one of the at least two acoustoelectric transducers (2), which audio signal is filtered with the second filter parameters (34), and an audio signal (22') from another of the at least two acoustoelectric transducers (2').

11. Method according to one of the preceding claims, wherein the method is carried out only in a subset of a plurality of disjunct or only partially overlapping frequency ranges of the audio signals (22, 22').

12. Method according to one of the preceding claims, wherein the second filter (26) most heavily attenuates signals from an audio source that is arranged in front of the wearer of the hearing aid when the hearing aid (100) is worn in accordance with the intended use.

13. Method according to one of Claims 1 to 11, wherein the apparatus (7) has a plurality of second filters (26) that each most heavily attenuate signals from an audio source at different relative positions in relation to the hearing aid (100).

14. Method according to one of the preceding claims, wherein the method additionally has the step of reducing background noise in signals from the first (2) and the second acoustoelectric transducer (2') before they are supplied to the first filter (24) and the second filter (26).

15. Apparatus for fast recognition of an own voice of a hearing aid wearer for a hearing aid (100), wherein the hearing aid (100) is designed to receive audio signals (22, 22') from at least two acoustoelectric transducers (2, 2'), wherein the apparatus has a first filter (24) and a second filter (26) for spatial separation that are connected for signaling purposes to the acoustoelectric transducers (2, 2'), wherein the first filter (24) is an adaptive filter and is designed to attenuate the own voice of a hearing aid wearer and the second filter (26) is designed to attenuate an external audio source; wherein the apparatus (7) is additionally designed to recognize the wearer's own voice on the basis of an output signal (32, 38) from the first filter (24) and the second filter (26), and wherein the apparatus (7) is furthermore designed to ascertain the first filter parameters (28) by a training with the own voice of the hearing device wearer if the hearing aid (100) is worn by the hearing device wearer in accordance with the intended use.

16. Apparatus according to Claim 15, wherein the first filter (24) is an adaptive filter having first filter parameters (28) that filter an audio signal (22) from one of the at least two acoustoelectric transducers (2), and a difference signal is formed from the audio signal (30) filtered with the first filter parameters (28) and the audio signal (22') from another of the at least two acoustoelectric transducers (2') as an output signal (32) from the first filter (24).

17. Apparatus according to Claim 15 or 16, wherein the second filter (26) is an adaptive filter having second filter parameters (34) that filter an audio signal (22) from one of the at least two acoustoelectric transducers (2), and a difference signal is formed from the audio signal (36) filtered with the second filter parameters (34) and the audio signal (22') from another of the at least two acoustoelectric transducers (2') as an output signal (38) from the second filter (26).

18. Hearing aid having an apparatus (7) according to one of Claims 15 to 17.

## Revendications

1. Procédé de détection rapide de la voix propre d'un porteur de prothèse auditive pour une prothèse auditive (100), dans lequel la prothèse auditive (100) reçoit des signaux audio en provenance d'au moins deux transducteurs électroacoustiques (2, 2') et comporte un dispositif (7) pourvu d'un premier filtre (24) et d'un second filtre (26) destinés à la séparation spatiale et qui sont en liaison de signaux avec les transducteurs électroacoustiques (2, 2'), dans lequel le procédé comprend les étapes consistant à :
déterminer les premiers paramètres de filtre (28) du premier filtre (24), dans lequel les premiers paramètres de filtre (24) sont conçus pour atténuer la voix propre du porteur de la prothèse auditive, dans lequel le premier filtre (24) est un filtre adaptatif et les premiers paramètres de filtre (28) sont déterminés au moyen d'un premier apprentissage du premier filtre (24) avec la voix propre d'un porteur de prothèse auditive, dans lequel la prothèse auditive (100) est portée selon sa destination par le porteur de prothèse auditive ;
déterminer des seconds paramètres de filtre (34) du second filtre (26), dans lequel les seconds paramètres de filtre (34) sont conçus pour atténuer une source audio externe ;
faire fonctionner le dispositif (7), dans lequel le premier filtre (24) fonctionne avec les premiers paramètres de filtre (28) et le second filtre (26) fonctionne avec les seconds paramètres de filtre (34) ;
détecter la voix propre en fonction d'un signal de sortie (32, 38) du premier filtre (24) et du second filtre (26).

2. Procédé selon la revendication 1, dans lequel les premiers paramètres de filtre (28) atténuent la voix propre du porteur de prothèse auditive en représentant une fonction de transfert d'un trajet sonore de la bouche du porteur de prothèse auditive vers la prothèse auditive (100) et en utilisant la fonction de transfert pour l'atténuation.

3. Procédé selon la revendication 1 ou la revendication 2, dans lequel les seconds paramètres de filtre (34) atténuent une source audio externe en représentant une fonction de transfert d'un trajet sonore d'une source audio externe vers la prothèse auditive (100) et en utilisant la fonction de transfert pour l'atténuation.

4. Procédé selon l'une des revendications précédentes, dans lequel les premiers paramètres de filtre (28) atténuent la voix propre de l'utilisateur de la prothèse auditive en faisant en sorte que les premiers paramètres de filtre (28) filtrent un signal audio (22) de l'un desdits au moins deux transducteurs électroacoustiques (2) et que le signal audio filtré (30) soit comparé au signal audio (22') d'un autre desdits au moins deux transducteurs électroacoustiques (2').

5. Procédé selon la revendication 4, dans lequel, pour la détermination des premiers paramètres de filtre (28), on utilise les valeurs de paramètres au moyen desquelles un signal de différence (32) entre le signal audio filtré (30) et le signal audio (22') de l'autre transducteur électroacoustique (2') est réduit à un niveau minimum.

6. Procédé selon l'une des revendications précédentes, dans lequel le second filtre (26) est un filtre adaptatif et les seconds paramètres de filtre (34) sont déterminés au moyen d'un second apprentissage du second filtre (26) avec une source audio externe dans une position relative prédéterminée par rapport à la prothèse auditive (100).

7. Procédé selon la revendication 6, dans lequel les seconds paramètres de filtre (34) atténuent une source audio externe en faisant en sorte que les seconds paramètres de filtre (34) filtrent un signal audio (22) de l'un desdits au moins deux transducteurs électroacoustiques (2) et que le signal audio filtré (36) soit comparé au signal audio (22') d'un autre desdits au moins deux transducteurs électroacoustiques (2').

8. Procédé selon la revendication 7, dans lequel, pour la détermination des seconds paramètres de filtre (34), on utilise les valeurs de paramètres au moyen desquelles un signal de différence (38) entre le signal audio filtré (36) et le signal audio (22') de l'autre transducteur électroacoustique (2') est minimisé.

9. Procédé selon l'une des revendications précédentes, dans lequel la détection de la voix propre est effectuée en fonction d'un rapport entre les amplitudes des signaux de sortie (32, 38) du premier filtre (24) et du second filtre (26).

10. Procédé selon la revendication 9, dans lequel le signal de sortie (32) du premier filtre (24) est formé par un signal de différence (32) entre un signal audio (30) filtré avec les premiers paramètres de filtre (28) de l'un desdits au moins deux transducteurs électroacoustiques (2) et un signal audio (22') d'un autre desdits au moins deux transducteurs électroacoustiques (2'), et dans lequel le signal de sortie (38) du second filtre (26) est formé par un signal de différence (38) entre un signal audio (36) filtré avec les seconds paramètres de filtre (34) de l'un desdits au moins deux transducteurs électroacoustiques (2) et un signal audio (22') d'un autre desdits au moins deux transducteurs électroacoustiques (2').

11. Procédé selon l'une des revendications précédentes, dans lequel le procédé n'est mis en oeuvre que dans un sous-ensemble d'une pluralité de plages de fréquences disjointes ou ne se chevauchant que partiellement des signaux audio (22, 22').

12. Procédé selon l'une des revendications précédentes, dans lequel le second filtre (26) atténue le plus fortement des signaux provenant d'une source audio disposée devant le porteur de prothèse auditive dans le cas d'une prothèse auditive (100) portée selon sa destination.

13. Procédé selon l'une des revendications 1 à 11, dans lequel le dispositif (7) comporte une pluralité de seconds filtres (26) qui atténuent respectivement le plus fortement des signaux provenant d'une source audio dans des positions relatives différentes par rapport à la prothèse auditive (100).

14. Procédé selon l'une des revendications précédentes, dans lequel le procédé comprend en outre l'étape consistant à réduire le bruit de fond dans des signaux des premier (2) et second transducteurs électroacoustiques (2') avant lesdits signaux ne soient transmis au premier filtre (24) et au second filtre (26) .

15. Dispositif de détection rapide de la voix propre d'un porteur de prothèse auditive pour une prothèse auditive (100), dans lequel la prothèse auditive (100) est conçue pour recevoir des signaux audio (22, 22') en provenance d'au moins deux transducteurs électroacoustiques (2, 2'), dans lequel le dispositif comporte un premier filtre (24) et un second filtre (26) destinés à la séparation spatiale, qui sont en liaison de signal avec les transducteurs électroacoustiques (2, 2'), dans lequel le premier filtre (24) est un filtre adaptatif et est conçu pour atténuer la voix propre d'un porteur de prothèse auditive et le second filtre (26) est conçu pour atténuer une source audio externe ; dans lequel le dispositif (7) est en outre conçu pour détecter la voix propre en fonction d'un signal de sortie (32, 38) du premier filtre (24) et du second filtre (26) ; et dans lequel le dispositif (7) est en outre conçu pour déterminer les premiers paramètres de filtre (28) par un apprentissage avec la voix propre du porteur de prothèse auditive lorsque la prothèse auditive (100) est portée selon sa destination par le porteur de prothèse auditive.

16. Dispositif selon la revendication 15, dans lequel le premier filtre (24) est un filtre adaptatif ayant des premiers paramètres de filtre (28) qui filtrent un signal audio (22) de l'un desdits au moins deux transducteurs électroacoustiques (2),
et un signal de différence est généré à partir du signal audio (30) filtré avec les premiers paramètres de filtre (28) et du signal audio (22') d'un autre desdits au moins deux transducteurs électroacoustiques (2'), en tant que signal de sortie (32) du premier filtre (24).

17. Dispositif selon la revendication 15 ou 16, dans lequel le second filtre (26) est un filtre adaptatif ayant des seconds paramètres de filtre (34) qui filtrent un signal audio (22) de l'un desdits au moins deux transducteurs électroacoustiques (2), et un signal de différence est généré à partir du signal audio (36) filtré avec lesdits seconds paramètres de filtre (34) et du signal audio (22') d'un autre desdits au moins deux transducteurs électroacoustiques (2'), en tant que signal de sortie (38) du second filtre (26).

18. Prothèse auditive comportant un dispositif (7) selon l'une des revendications 15 à 17.
